# EUROPÄISCHE PATENTANMELDUNG

(11) **EP 2 644 840 A1**
(43) Veröffentlichungstag der Anmeldung: **02.10.2013**
(21) Anmeldenummer: 12161657.7
(22) Anmeldetag: 28.03.2012
(51) Int. Cl.: F01D 19/00, F02C 7/24, F01K 7/24, F01K 9/00

(54) **Dampfturbinensystem und Verfahren zum Anfahren einer Dampfturbine**

(71) Anmelder: Siemens Aktiengesellschaft, 80333 München (DE)
(72) Erfinder: Pötter, Rudolf, 45355 Essen (DE)

(57) **Zusammenfassung**

Die Erfindung betrifft ein Dampfturbinensystem (21, 41) mit einer Dampfturbine (1, 21), mit den Merkmalen: die Dampfturbine weist eine Zudampfseite (6, 26), eine Abdampfseite (12, 32) und ein Turbinengehäuse auf; das Turbinengehäuse weist für eine Turbinenwelle eine Durchführung auf, wobei in der Durchführung eine Dichtung (15, 15', 35, 35') vorhanden ist, mir der ein Fluidstrom durch die Durchführung minimierbar ist; ein Dampfleitungssystem zu der Dichtung (15, 15', 35, 35') ist vorhanden; die Dampfturbine (1, 21) ist aus mindestens einem ersten Teilabschnitt (2, 22) und mindestens einem zweiten Teilabschnitt (3, 23) aufgebaut und zwischen zwei Teilabschnitten (2, 3, 22, 23) ist eine Verbindungsleitung (10,30) zu einem Bereich niedrigen Drucks, insbesondere zu einem Kondensator, vorhanden; bei der der Abdampfseite (12, 32) der Dampfturbine (1, 21) zugewandten Durchführung ist das Dampfleitungssystem (16, 17, 18, 19, 39, 40) derart ausgelegt, dass zum Anfahren der Dampfturbine (1, 21) eine Dampfzufuhr zur Dampfturbine (1, 21) durch das Dampfleitungssystem (16, 17, 18, 19, 39, 40) möglich ist, so dass zum Anfahren der Dampfturbine (1, 21) ein Dampfstrom von der Abdampfseite (12, 32) zur Verbindungsleitung (10, 30) zum Bereich niedrigen Drucks möglich ist; eine Zudampfzufuhrleitung (4,24) weist eine derart ansteuerbare Absperrung (5, 25) auf, dass zum Anfahren der Dampfturbine (1, 21) ein Dampfstrom von der Zudampfseite (6, 26) zur Verbindungsleitung (10, 30) zum Bereich niedrigen Drucks möglich ist.

## Beschreibung

Die Erfindung betrifft ein Dampfturbinensystem, bei dem das Anfahren einer Dampfturbine verbessert ist. Die Erfindung betrifft ferner ein zugehöriges Verfahren.

Beim Anfahren von Dampfturbinen in thermischen Kraftanlagen ist die mechanische Leistung zunächst begrenzt, da der Generator während des Anfahrens nicht hinreichend synchronisiert und unter Last betrieben werden kann. Die im Dampf enthaltene Energie wird von daher nur zu einem geringeren Teil als im normalen Leistungsbetrieb in mechanische Arbeit umgewandelt. Diese niedrigere Energieentnahme führt zu einer reduzierten Abkühlung des Dampfs beim Durchströmen der Dampfturbine. Damit treten vor allem in dem Bereich der Dampfturbine, in dem der Dampf austritt, also im Abdampfbereich, deutlich höhere Temperaturen auf als im normalen Leistungsbetrieb. Besonders gilt dies dann, wenn die dampfturbineninternen Verluste zurückgehen, wenn zum Beispiel die Niederdruckturbine nicht in Betrieb ist.

Diese höheren Temperaturen machen eine kostspielige Auslegung gegen diese Temperaturen erforderlich. Zur Vermeidung der höheren Temperaturen werden bisher folgende Maßnahmen vorgeschlagen und realisiert. Zum Einen ist die sogenannte "Vertrimmung" bekannt. Bei einem System mit einer Hochdruckturbine, einer Mitteldruckturbine und einer Niederdruckdruckturbine mit Zwischenüberhitzung treten die hohen Temperaturen vorwiegend am Hochdruckabdampf und am Niederdruckabdampf auf. Um die Temperatur am Niederdruckabdampf zu reduzieren, wird eine Wassereindüsung vorgenommen, es wird also dem Dampf zusätzlich Wasser zugeführt. Damit wird die Temperatur in zulässigen Grenzen gehalten. Die Hochdruckabdampftemperatur wird begrenzt, indem der Massenstrom durch den Hochdruckabschnitt erhöht wird. Zugleich wird der Massenstrom durch den Mitteldruck- und den Niederdruckabschnitt verringert. Das erhöhte Druckverhältnis im Hochdruckabschnitt reduziert die Hochdruckabdampftemperatur. Das verringerte Druckverhältnis im Mitteldruck- und Niederdruckabschnitt erhöht die Ventilationsleistung im Niederdruckabschnitt und kompensiert die gestiegene Leistung im Hochdruckabschnitt.

Falls es nicht genügt, die Temperatur im Hochdruckabschnitt auf das gewünschte Maß zu senken, wird mit einer Anfahrleitung der Abdampfraum der Hochdruckturbine mit dem Kondensator verbunden. Dadurch schließt eine Rückschlagklappe zur kalten Zwischenüberhitzung, es erfolgt also keine Dampfanzapfung aus der Hochdruckturbine in die Zwischenüberhitzung. Das niedrigere Druckniveau führt zu einer geringeren Hochdruckabdampftemperatur.

Ein weiterer Ansatz zur Temperaturabsenkung sieht vor, die mechanische Leistung des Generators zu erhöhen. Genauer gesagt soll der Generator schon im Anfahrbetrieb, also bei niedrigen und sich ständig erhöhenden Drehzahlen, bei denen eine Synchronisation nicht möglich ist, elektrische Leistung liefern. Wegen der fehlenden Synchronisation kann diese erzeugte elektrische Leistung nicht an das Stromnetz abgegeben werden. Daher werden zum Verbrauch des erzeugten Stroms elektrische Heizelemente vorgesehen. Die in den Heizelementen erzeugte Wärme kann in die Vorwärmstrecke des Wasserdampfkreislaufs eingebunden werden und zur Speisewasservorwärmung genutzt werden.

Aufgabe der Erfindung ist es ein Dampfturbinensystem und ein zugehöriges Verfahren zum Anfahren einer Dampfturbine bereitzustellen, mit denen auf einfache Weise die thermischen Probleme beim Anfahren bewältigt werden können.

Die Aufgabe wird insbesondere durch die unabhängigen Patentansprüche gelöst. Die abhängigen Patentansprüche geben vorteilhafte Ausgestaltungen an.

Zur Lösung dieser Aufgabe wird ein Dampfturbinensystem vorgeschlagen, welches folgende Merkmale aufweist: Das Dampfturbinensystem weist eine Dampfturbine mit einer Zudampfseite, einer Abdampfseite und einem Turbinengehäuse auf. Das Turbinengehäuse weist für eine Turbinenwelle eine Durchführung auf. In dieser Durchführung ist eine Dichtung vorhanden. Hierbei handelt es sich zumeist um eine Labyrinthdichtung. Die Dichtung soll einen Fluidstrom, also normalerweise einen Dampfstrom, durch die Durchführung minimieren. Zu der Dichtung führt ein Dampfleitungssystem. Die Dampfturbine ist aus mindestens einem ersten Teilabschnitt und mindestens einem zweiten Teilabschnitt aufgebaut und zwischen den beiden Teilabschnitten ist eine Verbindungsleitung zu einem Bereich niedrigen Drucks, insbesondere zu einem Kondensator einer thermischen Kraftanlage, vorhanden. Unter dem niedrigen Druck ist hier ein Druck zu verstehen, der so deutlich unter dem Druck in der Dampfturbine liegt, dass bei Öffnen der Verbindungsleitung Dampf von der Dampfturbine in diesen Bereich strömt. In der Regel bietet es sich an, dass eine Verbindungsleitung zum Kondensator besteht. Bei der der Abdampfseite der Dampfturbine zugewandten Durchführung ist das Dampfleitungssystem derart ausgelegt, dass zum Anfahren der Dampfturbine eine Dampfzufuhr zur Dampfturbine durch das Dampfleitungssystem möglich ist. Damit kann zum Anfahren der Dampfturbine ein Dampfstrom von der Abdampfseite zur Verbindungsleitung zum Bereich niedrigen Drucks erfolgen. Eine Zudampfzufuhrleitung weist eine derart ansteuerbare Absperrung auf, dass zum Anfahren der Dampfturbine ein Dampfstrom von der Zudampfseite zur Verbindungsleitung zum Bereich niedrigen Drucks möglich ist.

Bei der Zudampfseite handelt es sich um diejenige Seite, auf der der Dampfturbine im normalen Leistungsbetrieb Dampf zugeführt wird. Bei einer Hochdruckturbine handelt es sich um die Seite, auf der der von einem hier nicht näher beschriebenen Dampferzeuger kommende Frischdampf zugeführt wird. Bei einer Mitteldruckturbine ist es der aus einer Zwischenüberhitzung stammende Dampf. Die Abdampfseite ist entsprechend diejenige Seite, an der der Dampf im Leistungsbetrieb aus der Dampfturbine austritt. An diesen Begriffen soll im Rahmen dieser Darstellung festgehalten werden, auch wenn erfindungsgemäß zum Anfahren gerade an der Abdampfseite Dampf zugeführt wird.

Die Erfindung ermöglicht Dampf vom Dampfleitungssystem über die Dichtung zuzuführen. Damit kann Dampf mit niedrigerer Temperatur als der Temperatur des Frischdampfs beziehungsweise des Zwischenüberhitzungsdampfs gewählt werden. Das einleitend erläuterte Problem der hohen Temperaturen beim Anfahren im Bereich nahe der Abdampfseite wird somit vermieden. Bei der Strömung des Dampfs von der Abdampfseite zur Verbindungsleitung zum Bereich niedrigeren Drucks kann keine mechanische Arbeit geleistet werden, da der Dampf gegen die im Leistungsbetrieb übliche Richtung strömt. Dem Dampf wird somit keine nennenswerte Energie entnommen, welche zu einer Abkühlung des Dampfs führen würde. Vielmehr tritt durch die sogenannte Ventilation eine Erhöhung der Temperatur auf. Damit steigt in der Dampfturbine die Temperatur von der Abdampfseite bis zum Bereich zwischen den Turbinenabschnitten. Es stellt sich in der Dampfturbine somit ein Temperaturprofil ein, welches zumindest qualitativ dem Temperaturprofil im Leistungsbetrieb entspricht.

Die Zudampfzufuhrleitung ist bei der Hochdruckturbine normalerweise eine Frischdampfleitung, bei der Mitteldruckturbine normalerweise eine Zwischenüberhitzungsdampfleitung. Bei den ansteuerbaren Armaturen in der Zudampfzufuhrleitung handelt es sich im Regelfall um ein Frischdampfventil beziehungsweise um ein Zwischenüberhitzungsventil.

In einer Ausführungsform weist das Dampfleitungssystem eine Zwischenabsaugungsleitung und/oder eine Sperrdampfleitung und/oder eine Wrasendampfleitung auf. Beim Betrieb der Dampfturbine herrscht im Turbinengehäuse ein deutlich höherer Dampfdruck als außerhalb des Turbinengehäuses. Die Turbinenwelle muss sich in der Durchführung möglichst berührungsfrei drehen können. Daher kann keine komplett abdichtende Dichtung zwischen der Turbinenwelle und der Durchführung für die Turbinenwelle im Turbinengehäuse eingesetzt werden. Als Dichtung wird normalerweise eine Labyrinthdichtung eingesetzt. Dazu sind in der Durchführung am Turbinengehäuse Einbauten vorgesehen, die in die Durchführung ein Stück weit hineingreifen, also den Durchmesser der Durchführung an bestimmten Stellen reduzieren. An der Turbinenwelle sind Aufbauten vorhanden, welche den Durchmesser der Turbinenwelle an bestimmten Stellen erhöhen. Bei den Einbauten und Aufbauten handelt es sich im Regelfall um dünne Bleche. Die Turbinenwelle ist so angeordnet, dass die an der Turbinenwelle befestigten Aufbauten in den Raum zwischen die Einbauten ragen. Die Turbinenwelle kann sich damit frei drehen. Wegen des höheren Dampfdrucks im Turbinengehäuse als in der Umgebung des Turbinengehäuses strömt der Dampf - wegen der Wirkung der Dichtung in einer stark reduzierten Dampfmenge- durch die Durchführung, also vorbei an den Einbauten und den Aufbauten. Dabei sinkt der Dampfdruck vom Turbinengehäuse in Richtung Umgebung. Zur Minimierung von Verlusten wird der Dampf in den verschiedenen Bereichen der Dichtung abgesaugt und an anderer Stelle in der thermischen Kraftanlage genutzt. In dem Bereich der Dichtung, der nahe dem inneren Bereich des Turbinengehäuses liegt, befindet sich bei einer Hochdruckturbine eine Zwischenabsaugungsleitung, die zum Zwischenabsaugungssystem führt. Bei der Mitteldruckturbine ist normalerweise keine Zwischenabsaugungsleitung vorhanden. Weiter außen wird der Sperrdampf über eine Sperrdampfleitung entnommen. Der Wrasendampf wird in einem Bereich der Dichtung, der weit außerhalb, also in Richtung des Bereichs außerhalb des Turbinengehäuses liegt, über die Wrasendampfleitung entnommen. Dieses Dampfleitungssystem kann erfindungsgemäß nun auch dazu genutzt werden, Dampf auf der Abdampfseite der Dampfturbine zuzuführen, wie oben dargelegt.

Die Verbindungsleitung zum Bereich niedrigen Drucks ist bevorzugt an einer Dampfanzapfung angebracht, beispielsweise angeflanscht. Die Dampfanzapfung befindet sich ohnehin im für die Verbindungsleitung gewünschten Bereich der Dampfturbine. Damit können weitere Einbauten unmittelbar an der Dampfturbine vermieden werden.

In einer Ausführungsform ist eine Hilfsdampfleitung vorhanden, mit der der Zwischenabsaugungsleitung Hilfsdampf zugeführt werden kann. Da die Zwischenabsaugungsleitung in ein Zwischenabsaugungssystem, normalerweise zum Abdampf der Niederdruckturbine, führt, sollte die Möglichkeit bestehen, die Zwischenabsaugungsleitung von dem Zwischenabsaugungssystem zu trennen, damit der Hilfsdampf nicht in das Zwischenabsaugungssystem abströmt, sondern zur Dampfzufuhr über die Dichtung zur Verfügung steht.

In einer Ausführungsform sind Steuereinrichtungen vorhanden, um zum Anfahren den gewünschten Dampfstrom von der Abdampfseite zur Verbindungsleitung zum Bereich niedrigen Drucks und den gewünschten Dampfstrom von der Zudampfseite zur Verbindungsleitung zum Bereich niedrigen Drucks herbeizuführen. Dies schließt im Regelfall ein, dass Armaturen, wie das Frischdampfventil und das Zwischenüberhitzungsdampfventil, in der Zudampfzufuhrleitung entsprechend ansteuerbar sein müssen und entsprechende Ansteuereinrichtungen existieren. Ebenso sind entsprechend ansteuerbare Armaturen im Dampfleitungssystem zur Dichtung erforderlich. Darüber hinaus ist an verschiedenen Stellen im Dampfturbinensystem der Druck zu bestimmen, um die entsprechenden Dampfströme ermitteln zu können. Durch die geschilderten Vorrichtungen kann ein weitgehend automatisiertes Anfahren der Dampfturbine ermöglicht werden.

Die Erfindung betrifft auch eine thermische Kraftanlage umfassend das oben geschilderte Dampfturbinensystem. Eine solche thermische Kraftanlage kann einfach angefahren werden und steht daher für den zunehmend geforderten Betrieb mit vielen und gegebenenfalls schnellen Leistungssteigerungen zur Verfügung.

Die Erfindung betrifft auch ein Verfahren zum Anfahren einer Dampfturbine. Dabei handelt es sich insbesondere um ein Verfahren zum Anfahren einer Dampfturbine in einem oben geschilderten Dampfturbinensystem. Um Wiederholungen in der Darstellung zu vermeiden, wird weitgehend auf die Darstellungen zum Dampfturbinensystem verwiesen, in denen bereits Hinweise auf das entsprechende Verfahren enthalten sind. Das Verfahren zum Anfahren der Dampfturbine weist folgende Schritte auf: Zunächst wird die Dampfturbine evakuiert. Sodann wird ein mittlerer Bereich der Dampfturbine mit einem Bereich niedrigen Drucks, insbesondere mit einem Kondensator, verbunden. Sodann wird Dampf über eine eine Turbinenwelle gegen ein Turbinengehäuse abdichtende Dichtung zugeführt. Damit kann der Dampfturbine auf einer Abdampfseite Dampf zugeführt werden. Ebenso erfolgt eine dosierte Zuführung von Zudampf auf einer Zudampfseite der Dampfturbine um eine gewünschte Drehzahl und/oder Beschleunigung und/oder Leistung zu erreichen. Während der oben genannten Maßnahmen ist sicherzustellen, dass zugleich ein gewünschter Dampfstrom von der Abdampfseite zum mittleren Bereich der Dampfturbine strömt. Würde etwa zu viel Zudampf zugeführt werden, so würde sich im mittleren Bereich der Dampfturbine trotz der vorgesehenen Verbindungsleitung ein zu hoher Druck einstellen, so dass der Dampfstrom von der Abdampfseite zum mittleren Bereich ungewünscht reduziert werden würde. In diesem Fall ist entweder die Zudampfzufuhr zu drosseln und/oder über die Dichtung mehr Dampf auf der Abdampfseite zuzuführen. Ist eine gewünschte Leistung der Dampfturbine erreicht, so wird die Dampfzuführung über die Dichtung beendet und der mittlere Bereich der Dampfturbine wird vom Bereich niedrigen Drucks getrennt. Hierzu wird im Regelfall eine Armatur in der Verbindungsleitung zum Bereich niedrigen Drucks geschlossen. Sodann stellt sich die im Leistungsbetrieb übliche Durchströmung der Dampfturbine von der Zudampfseite zur Abdampfseite ein. Durch den ansteigenden Druck in der Dampfturbine öffnet sich auch eine Rückschlagklappe in einer Dampfanzapfung, so dass wie im Leistungsbetrieb einer thermischen Kraftanlage üblich, ein Teil des Turbinendampfs an anderer Stelle verwendet wird.

Die oben beschriebene Evakuierung der Dampfturbine kann durch das Verbinden des mittleren Bereichs der Dampfturbine mit dem Bereich niedrigen Drucks erfolgen. Damit sind die Schritte Evakuierung der Dampfturbine und Verbinden des mittleren Bereichs der Dampfturbine mit dem Bereich niedrigen Drucks im Grunde ein einziger Schritt.

In einer Ausgestaltung des Verfahrens, insbesondere wenn es sich um das Anfahren einer Hochdruckturbine handelt, wird zum Zuführen von Dampf über die Dichtung zunächst eine Zwischenabsaugungsleitung von einem Zwischenabsaugungssystem getrennt, es wird also im Normalfall die Verbindung zum Abdampf einer Mitteldruckturbine getrennt. Sodann wird Hilfsdampf über die Zwischenabsaugungsleitung zugeführt, so dass der Dampf in die Dichtung und von dort zur Abdampfseite der Dampfturbine strömen kann.

Alternativ, gegebenenfalls auch zusätzlich, erfolgt keine Zuführung von Hilfsdampf in die Zwischenabsaugungsleitung, sondern es wird Sperrdampf über eine Sperrdampfversorgung zugeführt. Dabei wird ebenfalls die Zwischenabsaugungsleitung vom Zwischenabsaugungssystem getrennt. Auch über die Sperrdampfversorgung kann der Dampfturbine auf der Abdampfseite Dampf zugeführt werden. Hierzu wird normalerweise in einer Sperrdampfkammer der gewünschte Druck eingestellt, so dass Dampf durch die Sperrdampfleitung fließt.

Wie bereits erwähnt kann als Zudampf für eine Hochdruckturbine Frischdampf eingesetzt werden. Ebenso wurde bereits dargestellt, dass als Zudampf für eine Mitteldruckturbine Dampf aus einer Zwischenüberhitzung bevorzugt eingesetzt wird.

Das Verbinden des mittleren Bereichs der Dampfturbine mit dem Bereich niedrigen Drucks erfolgt bevorzugt über eine Absperreinheit in einer Leitung, welche eine Anzapfung mit dem Kondensator verbindet. Damit entfällt die Notwendigkeit an der beengten Dampfturbine eine weitere Leitung vorzusehen. Es ist möglich, über die Anzapfung eine Verbindung zum Kondensator herzustellen. Durch eine Absperreinheit kann diese Verbindung beim Anfahren wie dargestellt auf Wunsch geöffnet werden und ansonsten geschlossen bleiben.

Eine Variante des Verfahrens zum Anfahren einer Dampfturbine sieht vor, dass vor Evakuierung der Dampfturbine die gesamte Dampfturbine mit Sperrdampf oder mit über die Zwischenabsaugungsleitung zugeführtem Hilfsdampf bedampft wird. Damit kann eine moderate erste Vorwärmung erfolgen. Die Bedampfung mit Hilfsdampf über die Zwischenabsaugung ist in der Regel nur bei Hochdruckturbinen möglich.

Um die Dampfzufuhr über die Sperrdampfversorgung in gewünschter Weise sicherzustellen, kann ein gewünschter Druck in der Sperrdampfkammer eingestellt werden. Auf diese Art und Weise erfolgt der gewünschte Dampfstrom.

Einzelheiten der Erfindung werden anhand nachfolgender Figuren nochmals näher dargestellt. Dabei zeigen:
- Figur 1: den Aufbau einer Hochdruckturbine, bei der zum Anfahren Hilfsdampf über die Zwischenabsaugungsleitung zugeführt wird,
- Figur 2: den Aufbau einer Hochdruckturbine, bei der zum Anfahren Sperrdampf eingesetzt wird,
- Figur 3: den Aufbau einer Mitteldruckturbine, bei der zum Anfahren Sperrdampf eingesetzt wird.

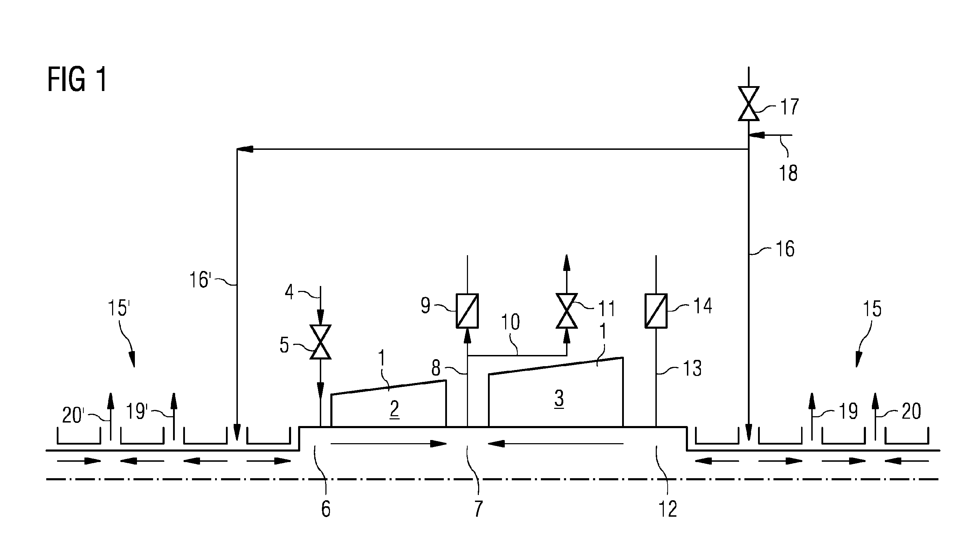

In Fig. 1 ist eine Dampfturbine 1 dargestellt, wobei es sich hierbei um eine Hochdruckturbine handelt. Diese weist einen ersten Turbinenabschnitt 2 und einen zweiten Turbinenabschnitt 3 auf. Zum ersten Turbinenabschnitt 2 führt als Zudampfzufuhrleitung eine Frischdampfleitung 4, in der ein Frischdampfventil 5 angeordnet ist. Damit kann Dampf zu einer Zudampfseite, sprich Frischdampfseite 6, der Hochdruckturbine 1 dosiert zugeführt werden. An einem mittleren Bereich 7 der Hochdruckturbine 1, also dem Bereich zwischen dem ersten Turbinenabschnitt 2 und dem zweiten Turbinenabschnitt 3 ist eine Anzapfung 8 angebracht. Die Anzapfung 8 führt über eine Rückschlagklappe 9 zu einem nicht dargestellten Vorwärmer. Die Rückschlagklappe 9 verhindert ein Strömen von Dampf aus dem Vorwärmer in die Hochdruckturbine 1 durch die Anzapfung 8. An der Anzapfung 8 ist eine Verbindungsleitung 10, häufig Anfahrleitung genannt, angebracht. Durch ein Verbindungsventil 11, das in der Verbindungsleitung 10 eingebaut ist, wird die Verbindung zu einem nicht dargestellten Kondensator bei Bedarf hergestellt oder getrennt. In einem Bereich neben dem zweiten Turbinenabschnitt 3 befindet sich eine Abdampfseite 12. Von dieser führt eine Abdampfleitung 13 zu einer Abdampfrückschlagklappe 14. An die Abdampfseite 12 der Hochdruckturbine 1 schließt sich auf der dem Turbinenabschnitt 3 abgewandten Seite eine Dichtung 15 an, welche Dampfstrom aus einem Turbinengehäuse in die Umgebung minimiert. Zu erkennen ist eine in die Dichtung 15 führende Zwischenabsaugungsleitung 16. Die Zwischenabsaugungsleitung 16 kann durch ein Zwischenabsaugungsventil 17 abgesperrt werden. Über eine Hilfsdampfleitung 18 kann der Zwischenabsaugungsleitung 16 Hilfsdampf zugeführt werden. Neben der Zwischenabsaugungsleitung 16 schließt an die Dichtung 15 zunächst eine Sperrdampfleitung 19 und weiter außen eine Wrasendampfleitung 20 an, durch die Sperrdampf bzw. Wrasendampf austreten kann. Vollständigkeitshalber sei darauf hingewiesen, dass eine weitere Dichtung 15' auf der Frischdampfseite 6 der Hochdruckturbine 1 vorhanden ist. Auch dort ist eine Zwischenabsaugungsleitung 16', eine Sperrdampfleitung 19' und eine Wrasendampfleitung 20' angeordnet.

Um die Hochdruckturbine 1 anzufahren, ist folgende Vorgehensweise zu wählen: Zunächst ist das Zwischenabsaugungsventil 17 zu schließen, um zu bedampfen. Sodann wird die Hochdruckturbine 1 mit dem ersten Turbinenabschnitt 2 und dem zweiten Turbinenabschnitt 3 mit Hilfsdampf, der über die Hilfsdampfleitung 18 in die Zwischenabsaugungsleitung 16 eingeführt wird, bedampft. Auch über die Zwischenabsaugungsleitung 16' fließt über die Dichtung 15' Dampf zur Hochdruckturbine 1. Damit erfolgt eine erste Vorwärmung der Hochdruckturbine 1. Sodann wird das Verbindungsventil 11 in der Verbindungsleitung 10 geöffnet. Damit erfolgt eine Evakuierung der Hochdruckturbine 1 mit dem ersten Turbinenabschnitt 2 und dem zweiten Turbinenabschnitt 3. Dampf kann somit vom mittleren Bereich 7 der Hochdruckturbine 1 über die Anzapfung 8 in die Verbindungsleitung 10 zum Kondensator strömen. Sodann wird über die Hilfsdampfleitung 18 eine gewünschte Menge Hilfsdampf bei einem bestimmten Druck zugeführt, um zwischen der Abdampfseite 12 und dem mittleren Bereich 7 der Hochdruckturbine 1 ein gewünschtes Druckverhältnis zu erreichen. Dies führt zu einem durch den Pfeil dargestellten Dampfstrom durch den zweiten Turbinenabschnitt 3 von der Abdampfseite 12 zum mittleren Bereich 7. Durch eine dosierte Öffnung des Frischdampfventils 5 strömt über die Frischdampfleitung 4 die gewünschte Dampfmenge zur Frischdampfseite 6. Im Weiteren ergibt sich dann zwischen der Frischdampfseite 6 und dem mittleren Bereich 7 ein gewünschter Dampfstrom durch den ersten Turbinenabschnitt 2, wie durch den Pfeil dargestellt. Der Dampfstrom durch den ersten Turbinenabschnitt 2 und der Dampfstrom durch den zweiten Turbinenabschnitt 3 vereinigen sich im mittleren Bereich 7 und strömen dann gemeinsam in die Anzapfung 8 und von dort über die Verbindungsleitung 10 zum Kondensator. Über die Öffnung des Frischdampfventils 5 kann die gewünschte Drehzahl und/oder Beschleunigung und/oder Leistung im ersten Turbinenabschnitt 2 eingestellt werden. Damit kann auch erreicht werden, dass das Druckverhältnis zwischen der Abdampfseite 12 und dem mittleren Bereich 7 den gewünschten Wert erhält. Damit wird der gewünschte Dampfstrom durch den zweiten Turbinenabschnitt 3 sichergestellt. Sobald im ersten Turbinenabschnitt 2 die Mindestleistung erreicht wird, wird die Hilfsdampfversorgung über die Hilfsdampfleitung 18 beendet. Das Zwischenabsaugungsventil 17 wird geöffnet. Das Verbindungsventil 11 in der Verbindungsleitung 10 wird geschlossen. Damit steigt der Druck in der Hochdruckturbine 1 an. Dies führt im Weiteren dazu, dass die Rückschlagklappe 9 zur Zwischenüberhitzung sich aufgrund des Drucks automatisch öffnet. Es stellt sich somit der normale Leistungsbetrieb ein, bei dem auf der Frischdampfseite 6 Frischdampf durch die Frischdampfleitung 4 zugeführt wird. Der Dampf strömt sodann durch den ersten Turbinenabschnitt 2 und den zweiten Turbinenabschnitt 3 zur Abdampfseite 12 und weiter durch die Abdampfleitung 13 über die dann geöffnete Abdampfrückschlagklappe 14. Ein Teil des Dampfs wird aus dem mittleren Bereich 7 über die Anzapfung 8 entnommen und fließt über die geöffnete Rückschlagklappe 9 zum nicht dargestellten Vorwärmer. Ergänzend ist zu erläutern, dass in den Sperrdampfleitungen 19, 19' und den Wrasendampfleitungen 20, 20'während des Anfahrens etwas Dampf entweicht, da über die Zwischenabsaugungsleitungen 16, 16' ein höherer Druck bereitgestellt wird.

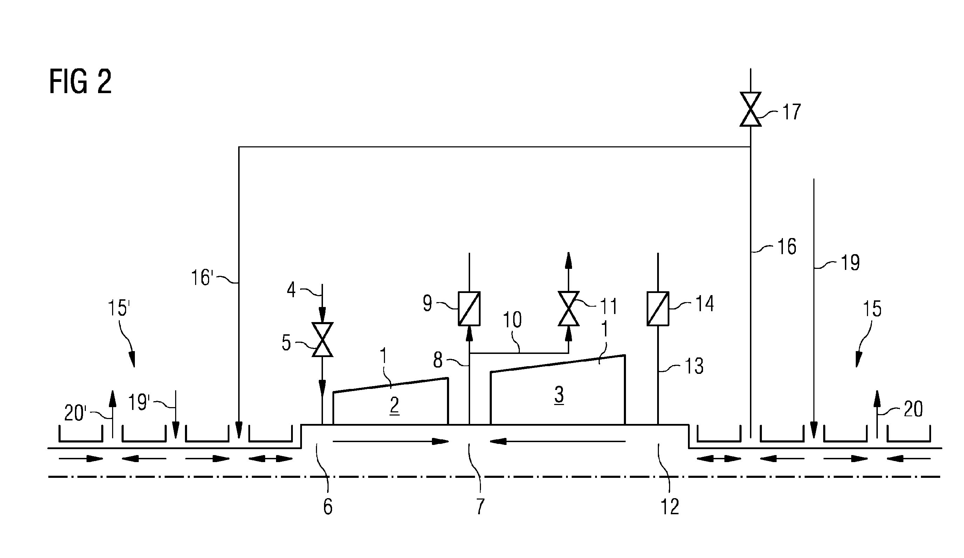

Nun wird eine weitere Möglichkeit zum Anfahren der Hochdruckturbine 1 dargestellt. Hierzu wird erhöhter Sperrdampfdruck genutzt. Wie zu erkennen ist, stimmt der Aufbau von Figur 2 mit dem von Figur 1 nahezu überein. Identische Merkmale werden zur Vermeidung von Wiederholungen nicht nochmals erläutert. Der Unterschied ist lediglich, dass keine Hilfsdampfleitung 18 zur Versorgung der Zwischenabsaugungsleitung 16 vorhanden ist und dass beim Anfahren der Dampfstrom in den Sperrdampfleitungen 19, 19' eine andere Richtung hat.

Auch das Verfahren zum Anfahren der Hochdruckturbine 21 ist relativ ähnlich. Zu Beginn ist auch das Zwischenabsaugungsventil 17 zu schließen. Sodann werden die Turbinenabschnitte 2 und 3 über die Sperrdampfleitungen 19 und 19' bedampft. Alle übrigen Schritte und Vorgehensweisen sind identisch. Freilich ist zur Einstellung des Drucks auf der Abdampfseite 12 nicht die Hilfsdampfversorgung 18, sondern entsprechend der Druck in einer Sperrdampfversorgung einzustellen. Hierzu wird der Druck in einer nicht dargestellten Sperrdampfkammer entsprechend gewählt.

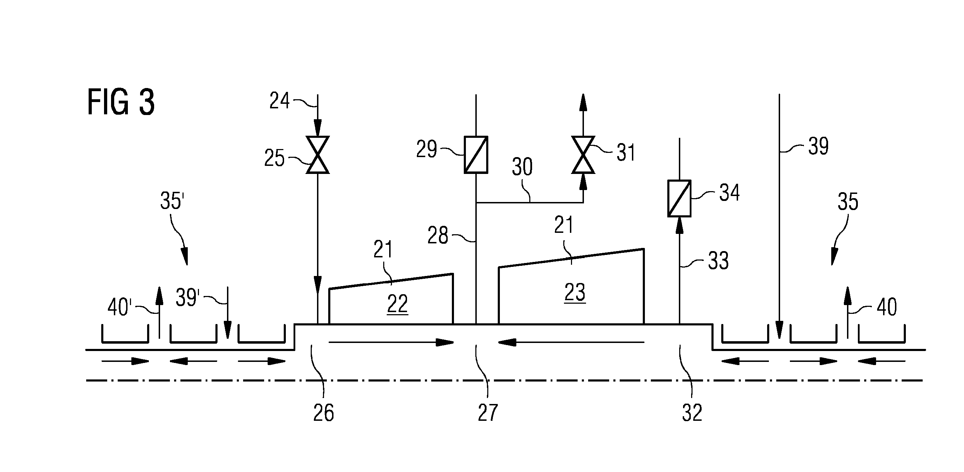

Das Anfahren einer Mitteldruckturbine wird anhand von Figur 3 nachfolgend dargestellt. In Figur 3 ist eine Mitteldruckturbine 21 zu erkennen. Sie weist einen ersten Turbinenabschnitt 22 und einen zweiten Turbinenabschnitt 23 auf. Durch eine als Zudampfzufuhrleitung dienende Zwischenüberhitzungsdampfleitung 24 wird aus einer Zwischenüberhitzung stammender Dampf in die Mitteldruckturbine 21 eingeleitet. Zur Regulierung des Dampfstroms dient ein in die Zwischenüberhitzungsdampfleitung 24 eingebautes Zwischenüberhitzungsventil 25 als ansteuerbare Absperrung. Der Dampf strömt im Leistungsbetrieb zu einer Zudampfseite 26, hier auch als Zwischenüberhitzungsdampfseite zu bezeichnen. Im Leistungsbetrieb erfolgt eine Entspannung durch den ersten Turbinenabschnitt 22 und nachfolgend durch den zweiten Turbinenabschnitt 23. Zwischen den Turbinenabschnitten 22 und 23 befindet sich ein mittlerer Bereich 27 der Mitteldruckturbine 21. Eine Anzapfung 28 führt durch eine Rückschlagklappe 29 zu einem nicht dargestellten zweiten Vorwärmer. Die Rückschlagklappe 29 verhindert ein Zurückströmen von dem Vorwärmer durch die Anzapfung 28 in die Mitteldruckturbine 21 bei zu niedrigem Druck in der Mitteldruckturbine 21. Von der Anzapfung 28 führt eine Verbindungsleitung 30, auch Anfahrleitung genannt, zum Kondensator. In der Verbindungsleitung 30 befindet sich ein Verbindungsventil 31, mit dem die Verbindungsleitung 30 mit dem Kondensator verbunden und von ihm getrennt werden kann. Von einer Abdampfseite 32 der Mitteldruckturbine strömt im normalen Leistungsbetrieb der Dampf in eine Abdampfleitung 33 durch eine Abdampfrückschlagklappe 34 zu einer zweiten Zwischenüberhitzung. An die Abdampfseite 32 der Mitteldruckturbine 21 schließt ein Bereich einer Dichtung 35 an. Wegen des niedrigeren Drucks in der Mitteldruckturbine 21 im Vergleich zur Hochdruckturbine 1 ist an der Dichtung 35 keine Zwischenabsaugungsleitung angeschlossen. Entsprechend wie bei der Hochdruckturbine 1 ist auch bei der Mitteldruckturbine 21 eine Sperrdampfleitung 39 und eine Wrasendampfleitung 40 an der Dichtung 35 angeschlossen.

Zum Anfahren der Mitteldruckturbine 21 wird nun folgendermaßen vorgegangen: Zunächst wird die Mitteldruckturbine 21 mit dem ersten Turbinenabschnitt 22 und dem zweiten Turbinenabschnitt 23 mit Sperrdampf, welcher aus der Leitung 39 stammt, bedampft. Sodann erfolgt eine Evakuierung durch Öffnen des Verbindungsventils 31 in der Verbindungsleitung 30 zum Kondensator. Durch Einstellung eines gewünschten Drucks in der Sperrdampfkammer ergibt sich ein gewünschtes Druckverhältnis zwischen der Abdampfseite 32 und dem mittleren Bereich 27 der Mitteldruckturbine 21. Damit stellt sich ein gewünschter Dampfstrom ein. Analog wie beim Anfahren der Hochdruckturbine 1 wird das Zwischenüberhitzungsventil 25 leicht geöffnet, so dass durch die Zwischenüberhitzungsdampfleitung 24 von der nicht dargestellten ersten Zwischenüberhitzung Dampf in die Zudampfseite 26 strömt. Von dort strömt der Dampf durch den ersten Turbinenabschnitt 22 zum mittleren Bereich 27. Die Öffnung des Zwischenüberhitzungsventils 25 erfolgt so, dass eine gewünschte Drehzahl und/oder Beschleunigung und/oder Leistung der Mitteldruckturbine 21, genauer gesagt des ersten Turbinenabschnitts 22 erreicht wird. Bei Erreichen einer Mindestleistung wird die Verbindungsleitung 30 vom Kondensator getrennt, indem das Verbindungsventil 31 geschlossen wird. Damit steigt der Druck in der Mitteldruckturbine 21 schnell an. Dadurch öffnet sich die Rückschlagklappe 34. Es erfolgt eine ordentliche Durchströmung des ersten Turbinenabschnitts 22 und des zweiten Turbinenabschnitts 23 der Mitteldruckturbine 21 bei begrenzter Ventilation. Die beiden Turbinenabschnitte 22 und 23 werden auch als Trommeln 22 und 23 bezeichnet.

Der Vollständigkeit halber wird noch angeführt, dass an die Zudampfseite 26' eine Dichtung 35' anschließt. Diese dichtet das Turbinengehäuse gegen die Turbinenwelle auf der Zudampfseite 26 ab. Entsprechend ist auch hier eine Sperrdampfleitung 39' und eine Wrasendampfleitung 40' zu erkennen. Beim Beginn des oben geschilderten Anfahrens der Mitteldruckturbine 21 strömt entsprechend auch durch die Sperrdampfleitung 39' Dampf zur Mitteldruckturbine 21'. Sobald über die Zwischenüberhitzungsdampfleitung 24 Dampf zur Zudampfseite 26 strömt und damit dort der Druck ansteigt, ist freilich der Dampfstrom der über die Sperrdampfleitung 39' durch die Dichtung 35' zur Zudampfseite 26 strömt sehr niedrig oder gleich Null.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Dampfturbinensystem (21, 41) mit einer Dampfturbine (1, 21), mit den Merkmalen:
die Dampfturbine weist eine Zudampfseite (6, 26), eine Abdampfseite (12, 32) und ein Turbinengehäuse auf;
das Turbinengehäuse weist für eine Turbinenwelle eine Durchführung auf, wobei in der Durchführung eine Dichtung (15, 15', 35, 35') vorhanden ist, mit der ein Fluidstrom durch die Durchführung minimierbar ist;
ein Dampfleitungssystem zu der Dichtung (15, 15', 35, 35') ist vorhanden;
die Dampfturbine (1, 21) ist aus mindestens einem ersten Teilabschnitt (2, 22) und mindestens einem zweiten Teilabschnitt (3, 23) aufgebaut und zwischen zwei Teilabschnitten (2, 3, 22, 23) ist eine Verbindungsleitung (10,30) zu einem Bereich niedrigen Drucks, insbesondere zu einem Kondensator, vorhanden;
bei der der Abdampfseite (12, 32) der Dampfturbine (1, 21) zugewandten Durchführung ist das Dampfleitungssystem (16, 17, 18, 19, 39, 40) derart ausgelegt, dass zum Anfahren der Dampfturbine (1, 21) eine Dampfzufuhr zur Dampfturbine (1, 21) durch das Dampfleitungssystem (16, 17, 18, 19, 39, 40) möglich ist, so dass zum Anfahren der Dampfturbine (1, 21) ein Dampfstrom von der Abdampfseite (12, 32) zur Verbindungsleitung (10, 30) zum Bereich niedrigen Drucks möglich ist;
eine Zudampfzufuhrleitung (4,24) weist eine derart ansteuerbare Absperrung (5, 25) auf, dass zum Anfahren der Dampfturbine (1, 21) ein Dampfstrom von der Zudampfseite (6, 26) zur Verbindungsleitung (10, 30) zum Bereich niedrigen Drucks möglich ist.

2. Dampfturbinensystem nach Anspruch 1,
wobei das Dampfleitungssystem eine Zwischenabsaugungsleitung (16, 16', 36, 36') und/oder eine Sperrdampfleitung (19, 19', 39, 39') und/oder eine Wrasendampfleitung (20, 20', 40, 40') umfasst.

3. Dampfturbinensystem nach Anspruch 1 oder 2,
wobei die Verbindungsleitung (10, 30) zu einem Bereich niedrigen Drucks an einer Dampfanzapfung (8, 28) angebracht ist, insbesondere angeflanscht ist.

4. Dampfturbinensystem nach einem der vorhergehenden Ansprüche,
wobei eine Hilfsdampfleitung (18) vorhanden ist, mit der der Zwischenabsaugungsleitung (16) Hilfsdampf zugeführt werden kann.

5. Dampfturbinensystem nach einem der vorhergehenden Ansprüche,
wobei Steuereinrichtungen vorhanden sind, um zum Anfahren den gewünschten Dampfstrom von der Abdampfseite (12, 32) zur Verbindungsleitung (10,30) zum Bereich niedrigen Drucks und den gewünschten Dampfstrom von der Zudampfseite (6, 26) zur Verbindungsleitung (10,30) zum Bereich niedrigen Drucks herbeizuführen.

6. Thermische Kraftanlage aufweisend ein Dampfturbinensystem nach einem der vorhergehenden Ansprüche.

7. Verfahren zum Anfahren einer Dampfturbine, insbesondere einer Dampfturbine (1, 21) nach einem der Ansprüche 1 bis 5,
welche ein Turbinengehäuse und eine Turbinenwelle aufweist, mit folgenden Schritten:
- Evakuierung der Dampfturbine (1, 21);
Verbinden eines mittleren Bereichs (7, 27) der Dampfturbine (1, 21) mit einem Bereich niedrigen Drucks, insbesondere mit einem Kondensator;
- Zuführen von Dampf über eine die Turbinenwelle gegen das Turbinengehäuse abdichtende Dichtung (15, 35) um der Dampfturbine (1, 21) auf einer Abdampfseite (12, 32) Dampf zuzuführen;
- Dosierte Zuführung von Zudampf auf einer Zudampfseite (6, 26) der Dampfturbine (1, 21) um eine gewünschte Drehzahl und/oder Beschleunigung und/oder Leistung zu erreichen;
Sicherstellung dass ein gewünschter Dampfstrom von der Abdampfseite (12, 32) zum mittleren Bereich (7, 27) der Dampfturbine (1, 21) fließt;
- Bei Erreichen einer gewünschten Leistung der Dampfturbine (1, 21) Beenden der Dampfzuführung über die Dichtung (15, 35) und Trennen des mittleren Bereichs (7, 27) der Dampfturbine (1, 21) vom Bereich niedrigen Drucks.

8. Verfahren nach Anspruch 7,
wobei die Evakuierung der Dampfturbine (1, 21) durch das Verbinden des mittleren Bereichs der Dampfturbine (1, 21) mit dem Bereich niedrigen Drucks erfolgt.

9. Verfahren nach einem der Ansprüche 7 oder 8,
wobei zum Zuführen von Dampf über die Dichtung (15) eine Zwischenabsaugungsleitung (16) von einem Zwischenabsaugungssystem getrennt wird und Hilfsdampf über die Zwischenabsaugungsleitung (16) zugeführt wird.

10. Verfahren nach einem der Ansprüche 7 bis 9,
wobei zum Zuführen von Dampf über die Dichtung (15) die Zwischenabsaugungsleitung (16) von dem Zwischenabsaugungssystem getrennt wird und Sperrdampf über eine Sperrdampfleitung (19) zugeführt wird.

11. Verfahren nach einem der Ansprüche 7 bis 10,
wobei als Zudampf für eine Hochdruckturbine (1) Frischdampf eingesetzt wird.

12. Verfahren nach einem der Ansprüche 7 bis 11,
wobei als Zudampf für eine Mitteldruckturbine (21) Dampf aus einer Zwischenüberhitzung eingesetzt wird.

13. Verfahren nach einem Ansprüche 7 bis 12,
wobei das Verbinden des mittleren Bereichs (7, 27) der Dampfturbine (1, 21) mit dem Bereich niedrigen Drucks über eine Absperreinheit (11, 31) in einer Verbindungsleitung (10, 30), welche eine Anzapfung (8, 28) mit dem Kondensator verbindet, erfolgt.

14. Verfahren nach einem Ansprüche 7 bis 13,
wobei als erster Schritt eine Bedampfung der Dampfturbine (1, 21) mit Sperrdampf und/oder über die Zwischenabsaugungsleitung (16, 16', 36, 36') zugeführten Hilfsdampf erfolgt.

15. Verfahren nach einem Ansprüche 7 bis 14,
wobei zur Dampfzufuhr über die Sperrdampfleitung (19, 39) in einer Sperrdampfkammer ein gewünschter Sperrdampfdruck eingestellt wird.
